# EUROPEAN PATENT APPLICATION

(11) **EP 1 248 475 A2**
(43) Date of publication of application: **09.10.2002**
(21) Application number: 01110768.7
(22) Date of filing: 03.05.2001
(51) Int. Cl.: H04Q 1/10, H04Q 1/14, H05K 7/00

(54) **Rack structure**

(30) Priority: 03.04.2001 US 826388
(71) Applicant: Redfern Broadband Networks Pty Ltd, Eveleigh, New South Wales 1430 (AU); Redfern Broadband Networks Inc., Wilmington, County of Newcastle, Delaware, 19801 (US)
(72) Inventor: Halgren, Ross, Plateau New South Wales, 2097 (AU); Lauder, Richard, New South Wales, 2035 (AU)
(74) Representative: Tiesmeyer, Johannes, Dr.

(57) **Abstract**

A rack structure for a network node system, the rack structure comprising a first rack portion arranged, in use, to receive a plurality of circuit cards in slots and having a plurality of first connector elements disposed on a backplane thereof, each first connector element being arranged to make contact with a corresponding second connector element of one of the cards when it is inserted into one of the slots, and a patch panel rack portion comprising, on a frontplane thereof, a plurality of third connector elements, each third connector element being internally connected to one of the first connectors, whereby the patch panel enables, in use, rewiring of the rack structure from the front of the rack structure.

## Description

### Field of the invention

The present invention relates broadly to a rack structure for a network node system.

### Background of the invention

In the development of hubbed optical networks, key issues include ensuring ease of network upgrade and network scalability.

With the speed of developments in this area, it is desirable to provide a network architecture/structure which ensures that options pursued and implemented at a particular stage do not significantly limit desired functionality in the future.

In that context, it would be desirable to provide a truly flexible plug and play architecture for a network node system for line interface cards and/or trunk interface cards.

### Summary of the invention

In accordance with a first aspect of the present invention there is provided a rack structure for a network node system, the rack structure comprising a first rack portion arranged, in use, to receive a plurality of circuit cards in slots and having a plurality of first connector elements disposed on a backplane thereof, each first connector element being arranged to make contact with a corresponding second connector element of one of the cards when it is inserted into one of the slots, and a patch panel rack portion comprising, on a frontplane thereof, a plurality of third connector elements, each third connector element being internally connected to one of the first connectors, whereby the patch panel enables, in use, rewiring of the rack structure from the front of the rack structure.

In one embodiment, the first, second, and third connector elements each comprise at least one input/output port pair and are arranged in a manner such that, in use, corresponding ports are being interconnected between a set of corresponding first, second, and third connector elements.

The interconnections between the first and third connector elements are preferably formed from full duplex optical fibre connections.

Where the first rack portion is arranged, in use, to receive interface cards, each interface card having the second connector element comprising two input/output port pairs, the first connector elements may each comprise corresponding two pairs of input/output ports, whereas the third connector elements may each comprise only one corresponding input/output port pair internally connected to one of the input/output ports pairs of the first connector elements.

In a preferred embodiment, where the interface cards comprise Line Interface cards (LICs) and Trunk Interface cards (TICs), the cross-connections between any one of the input/output ports pairs of each LIC and any one of the input/output ports pairs of each TIC are configured in a manner such that they are not accessible from the front of the rack structure. The rack structure may further comprise a switch rack portion arranged, in use, to selectively establish the cross-connections between any one of the input/output ports pairs of each LIC and any one of the input/output ports pairs of each TIC. Accordingly, the rack structure can provide a flexible configuration of the LICs and the TICs.

The patch panel rack portion preferably comprises a plurality of fourth connector elements disposed on the front panel thereof, each fourth connector element being internally connected to one of the channels of a WDM unit of the rack structure, whereby input/output ports pairs of the TICs can be patched to the channels of the WDM unit from the front of the rack structure. The WDM unit may be incorporated within the patch panel rack portion.

Preferably, the first and third connector elements and the internal connection between corresponding ones of the first and third connector elements comprise optical fibre capable of exhibiting, in use, both single mode and multi mode behaviour. Accordingly, each slot of the first rack portion in capable of receiving cards having either single mode fibre or multi mode fibre interfaces.

### Brief description of the drawings

Preferred forms of the present invention will now be described, by way of example only, with reference to the accompanying drawings.

Figure 1 is a schematic diagram illustrating a rack structure embodying the present invention.

Figure 2 is a schematic diagram illustrating the connectivity of a patch panel sub-rack of the rack structure of Figure 1.

Figure 3 is a schematic diagram illustrating an optical network comprising a plurality of network nodes incorporating the rack structure of Figure 1.

### Detailed description of the embodiments

The preferred embodiment described provides a rack structure for a network node system which incorporates a patch panel to facilitate rewiring of the rack structure from the front of the rack structure. This can be particularly useful where interconnects which are typically configured at the back of rack structures are difficult to access such as for example in a telecommunication exchange.

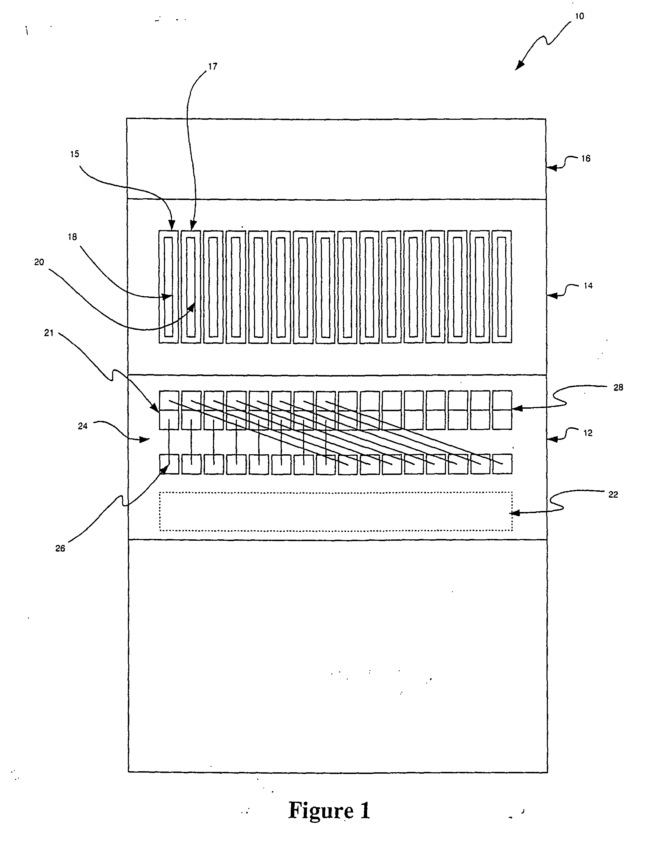

In Figure 1, a rack structure 10 comprises a patch panel sub-rack 12, an interface subrack 14, and a switch sub-rack 16.

Within the interface sub-rack 14, a plurality of line interface cards (LICs) e.g. 18 and trunk interface cards (TICs) e.g. 20 are received in corresponding slots e.g. 15, 17, with connectors (not shown) provided at the back plane of the interface sub-rack 14 to make optical contact with pairs of input/output ports (not shown) of the respective received interface cards e.g. 18, 20.

Reconfigurable connections between TIC's and LIC's may be made via a crosspoint switch located in a separate Switch Subrack 16 of the rack structure. The crosspoint switch may comprise an all-optical switch or an optical-electronic-optical (OEO) switch.

Alternatively or additionally any interface slot may receive a combined Trunk/Line Interface Card (TLC) comprising a single Trunk Interface and a single Line Interface on the same card. The use of TLC's enables a lower cost implementation of the interface cards, and a saving in the number of slots required, at the expense of some flexibility in providing reconfigurable connections between pairs of trunk and line interfaces.

The patch panel sub-rack 12 provides the ability to connect an interface card in any slot of the interface sub-rack 14 to any channel on a dense wavelength division multiplexer (DWDM) 22 incorporated within the patch panel sub-rack 12. This enables each slot within the sub-rack 14 to receive a TIC, LIC or TLC, and for trunk interfaces to be connected to the appropriate port of the DWDM unit 22 independent of the slot number and the operating wavelength of the trunk interface. Consequently all slots are line/trunk and frequency independent. The patch panel sub-rack 12 in the exemplary embodiment is configured for one 16 slot interface sub-rack 14 and one 16 channel DWDM unit 22. However, it will be appreciated by a person skilled in the art that the rack structure 10 could be expanded to additional interface sub-racks and DWDM units, preferably by providing a plurality of identical, interconnected interface sub-rack modules and patch panel sub-rack modules.

The patch panel sub-rack 12 comprises, on a front plane 24 thereof, the following accessible optical connections:
- all connections to the (bi-directional) channels of the DWDM unit 22, e.g. 26;
- all optical line and trunk connections to the LICs, e.g. 18, and TICs, e.g. 20, in pairs, e.g. 28, of input/output ports.

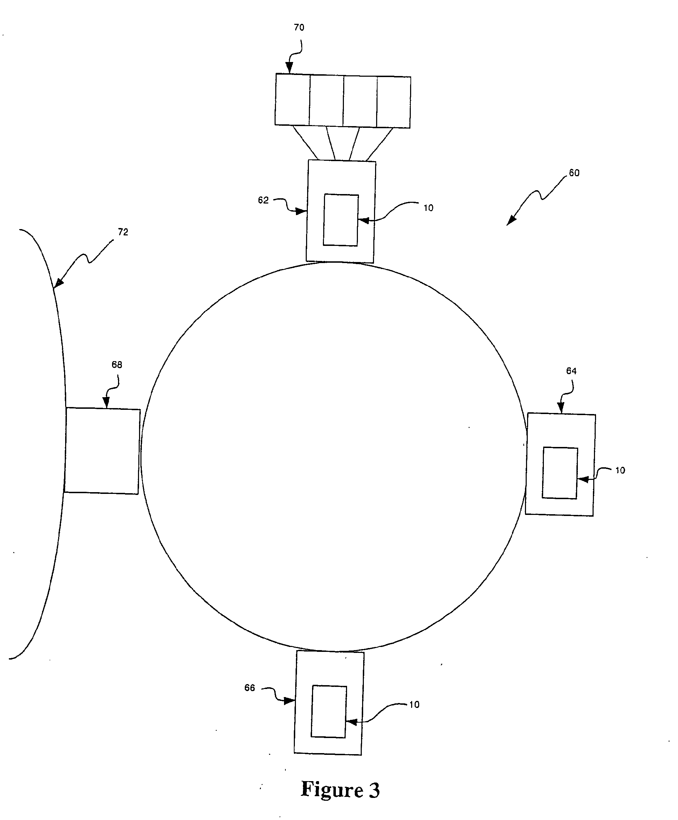

Each single connection e.g. 26 to the DWDM unit 22 corresponds to a single wavelength in use in the DWDM network 60 (Figure 3) that has been allocated for either reception or transmission by the network node housed in the rack structure 10. The DWDM Unit 22 is passive and bi-directional, and consequently any connection e.g. 26 may be connected by means of the patch panel sub-rack 12 to either an incoming or outgoing port of a TIC. Accordingly the patch panel sub-rack 12 provides the flexibility to configure the network node either for symmetric transmission and reception of up to eight bi-directional DWDM channels, or for asymmetric operation whereby, e.g. 15 DWDM channels may be utilised for reception and only e.g. one DWDM channel utilised for transmission.

Figure 1 shows an exemplary symmetric configuration of the patch panel subrack 12 in which there are eight full-duplex fibre connections to/from customers (at the first eight input/output pairs e.g. 28 from the right hand side), eight internal full-duplex fibre connections (not shown) to corresponding LIC's (not shown), eight internal full-duplex fibre connections (not shown) to the TIC's, and eight full-duplex fibre connections between the input/output ports of the TICS (at the first eight input/output pairs e.g. 21 from the left hand side) and the channel connections of the DWDM unit 22, e.g. 26.

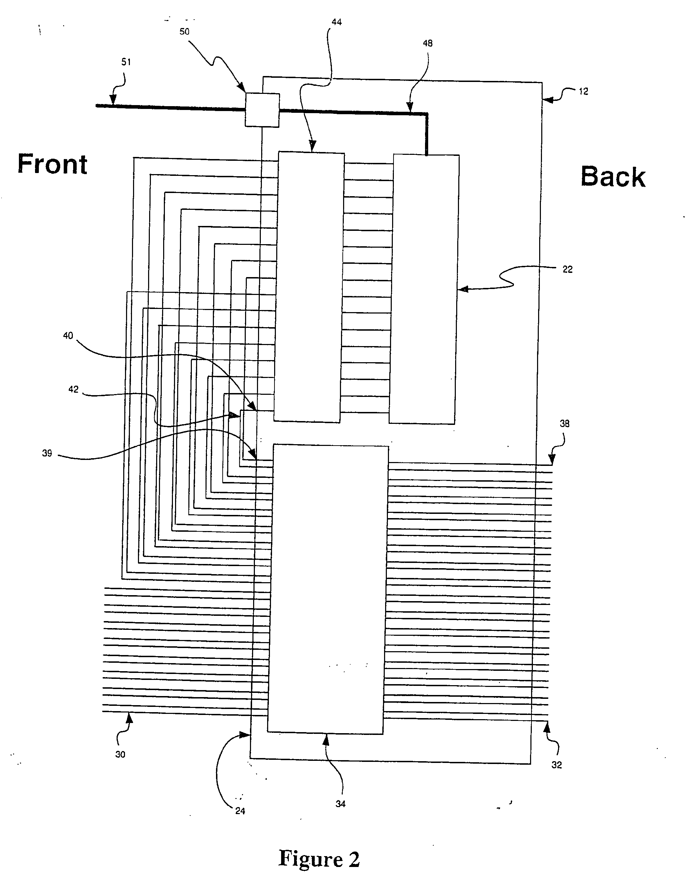

As shown in Figure 2, the patch panel subrack 12 thus serves to contain the following interconnections:
- Introduction of optical fibres to/from customers, e.g. 30 and through connection of these into the LICs located in the interface sub-rack 14 (Figure 1) via duplex optical fibre connections e.g. 32. In the exemplary embodiment, the patch panel sub-rack 12 contains a 16 through-connect duplex SC connection unit 34, where the rack structure is implemented for the interface sub-rack 14 (Figure 1) receiving 16 cards.

In the exemplary embodiment, the 16 through-connect duplex SC connection unit 34 through connects eight full-duplex fibre connections to/from customers e.g. 30, and through connects eight full-duplex fibre connections e.g. 38 to/from TICs received in the interface subrack 14 (Figure 1) to the front panel 24 of the patch panel sub-rack 12.

The transmit and receive ports of the TICs e.g. 39 are patched to DWDM channel connections e.g. 40 through suitable fibre links e.g. 42, from the front of the patch panel subrack 12.

The patch panel sub-rack 12 incorporates a 16 through-connect connection unit 44 for through connecting the respective TICs to the DWDM unit 22. The trunk output 48 of the DWDM unit 22 is connected to a Panel Mount E/2000 connector 50 located on the front plane 24 of the patch panel sub-rack 12, to which the trunk fibre 51 is externally connected. Accordingly, the trunk fibre 51 interconnection is readily accessible from the front of the rack structure 10 (Figure 1) similar to all of the customer equipment connections e.g. 30 and patch connections between the TICs and the DWDM channels e.g. 42. In the exemplary embodiment a Diamond E/2000 connector 50 is utilised to ensure an optically safe trunk fibre connection since these connectors have a high optical power rating.

It will be appreciated by a person skilled in the art that in the exemplary embodiment, it is particularly advantageous that certain of the connections established within the rack structure are accessible and reconfigurable from the front of the rack structure, whilst other connections are not. This is because those other connections such as e.g. the connections to and from the TICs and LICs to the switch sub-rack will typically not require frequent reconfiguration. That is, they do not need to be readily accessible from the front of the rack structure. Providing connections which do not require frequent reconfiguration at the front of the rack structure can have the disadvantage that this would increase the number of connections accessible and visible from the front of the rack structure. This may result in a less manageable configuration and/or may increase the possibility of accidental disconnections while working in the vicinity of the rack structure.

In Figure 3, an example optical ring network 60 comprises a plurality of metro hubs 62, 64, 66 and a core hub 68. In the optical network 60, optical connections between the metro hubs 62, 64, and 66 are provided by way of the core hub 68 in a client-server architecture.

Each of the metro hubs e.g. 62 incorporates a rack structure 10 as described above with reference to Figures 1 and 2, and interfaces to a plurality of subscribers e.g. 70 utilising the optical ring network 60. The optical ring network 60 in the exemplary embodiment is further connected to a core network 72, i.e. long-haul interconnections, via the core hub 68.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

A rack structure for a network node system, the rack structure comprising a first rack portion arranged, in use, to receive a plurality of circuit cards in slots and having a plurality of first connector elements disposed on a backplane thereof, each first connector element being arranged to make contact with a corresponding second connector element of one of the cards when it is inserted into one of the slots, and a patch panel rack portion comprising, on a frontplane thereof, a plurality of third connector elements, each third connector element being internally connected to one of the first connectors, whereby the patch panel enables, in use, rewiring of the rack structure from the front of the rack structure.

## Claims

1. A rack structure for a network node system, the rack structure comprising:
- a first rack portion arranged, in use, to receive a plurality of circuit cards in slots and having a plurality of first connector elements disposed on a backplane thereof, each first connector element being arranged to make contact with a corresponding second connector element of one of the cards when it is inserted into one of the slots, and
- a patch panel rack portion comprising, on a frontplane thereof, a plurality of third connector elements, each third connector element being internally connected to one of the first connectors, whereby the patch panel enables, in use, rewiring of the rack structure from the front of the rack structure.

2. A rack structure as claimed in claim 1, wherein the first, second, and third connector elements each comprise at least one input/output port pair and are arranged in a manner such that, in use, corresponding ports are being interconnected between a set of corresponding first, second, and third connector elements.

3. A rack structure as claimed in claim 2, wherein the interconnections between the first and third connector elements are formed from full duplex optical fibre connections.

4. A rack structure as claimed in claim 1, wherein the first rack portion is arranged, in use, to receive interface cards, each interface card having the second connector element comprising two input/output port pairs, and wherein the first connector elements each comprise corresponding two pairs of input/output ports, whereas the third connector elements each comprise only one corresponding input/output ports pair internally connected to one of the input/output ports pairs of the first connector elements.

5. A rack structure as claimed in claim 4, wherein the interface cards comprise Line Interface cards (LICs) and Trunk Interface cards (TICs).

6. A rack structure as claimed in claim 5, wherein cross-connections between any one of the input/output ports pairs of each LIC and any one of the input/output ports pairs of each TIC are configured in a manner such that they are not accessible from the front of the rack structure.

7. A rack structure as claimed in claim 6, wherein the rack structure further comprises a switch rack portion arranged, in use, to selectively establish cross-connections between any one of the input/output ports pairs of each LIC and any one of the input/output ports pairs of each TIC.

8. A rack structure as claimed in claim 5, wherein the interface cards alternatively or additionally comprise combined Trunk and Line interface Cards (TLC's).

9. A rack structure as claimed in claim 1, wherein the patch panel rack portion comprises a plurality of fourth connector elements disposed on the front panel thereof, each fourth connector element being internally connected to one of the channels of a WDM unit of the rack structure, whereby input/output ports pairs of the TICs can be patched to the channels of the WDM unit from the front of the rack structure.

10. A rack structure as claimed in claim 9, wherein the WDM unit is incorporated within the patch panel rack portion.

11. A rack structure as claimed in claim 1, wherein the first and third connector elements and the internal connections between corresponding ones of the first and third connector elements comprise optical fibre capable of exhibiting, in use, both single mode and multi mode behaviour.
